**Europäisches Patentamt**

**European Patent Office**

**Office européen des brevets**

(11) Veröffentlichungsnummer : **0 395 936 B1**

(19)

(12) **EUROPÄISCHE PATENTSCHRIFT**

(45) Veröffentlichungstag der Patentschrift :
**23.12.92 Patentblatt 92/52**

(51) Int. Cl.⁵ : **G01D 5/244**

(21) Anmeldenummer : **90107305.6**

(22) Anmeldetag : **18.04.90**

(54) **Positionsmesseinrichtung mit mehreren Abtastsstellen.**

(30) Priorität : **03.05.89 DE 3914557**

(43) Veröffentlichungstag der Anmeldung :
**07.11.90 Patentblatt 90/45**

(45) Bekanntmachung des Hinweises auf die
Patenterteilung :
**23.12.92 Patentblatt 92/52**

(84) Benannte Vertragsstaaten :
**AT CH DE FR GB IT LI**

(56) Entgegenhaltungen :
**EP-A- 0 302 194**
**CH-C- 407 569**
**DE-A- 1 811 961**
**DE-A- 2 952 106**
**US-A- 4 580 047**

(73) Patentinhaber : **Dr. Johannes Heidenhain GmbH**
**Dr.-Johannes-Heidenhain-Strasse 5 Postfach 1260**
**W-8225 Traunreut (DE)**

(72) Erfinder : **Huber, Norbert, Dipl.-Ing. (FH)**
**Sudetenstrasse 24**
**W-8225 Traunreut (DE)**
Erfinder : **Wastlhuber, Robert, Dipl.-Ing. (FH)**
**Tüchlerstrasse 10**
**W-8268 Garching/Alz (DE)**

EP 0 395 936 B1

Jouve, 18, rue Saint-Denis, 75001 PARIS

## Beschreibung

Die Erfindung betrifft eine Positionsmeßeinrichtung mit mehreren Abtaststellen gemäß dem Oberbegriff des Anspruches 1.

Eine derartige Positionsmeßeinrichtung wird insbesondere bei Bearbeitungsmaschinen zur Messung der Relativlage eines Werkzeuges bezüglich eines zu bearbeitenden Werkstücks sowie bei Koordinatenmeßmaschinen zur Ermittlung von Lage und/oder Abmessungen von Prüfobjekten eingesetzt.

Unter Positionsmeßeinrichtungen versteht man absolute oder inkrementale Längen- oder Winkelmeßeinrichtungen, bei denen die Teilung eines Teilungsträgers von einer Abtasteinheit zur Erzeugung von periodischen Abtastsignalen abgetastet wird, aus denen in einer Auswerteeinrichtung Meßwerte für die Relativlage der beiden zueinander verschiebbaren Objekte, beispielsweise des Werkzeugs und des Werkstücks bzw. der beiden zugehörigen Maschinenteile der Bearbeitungsmaschine, gewonnen werden.

Bei einer Längen- oder Winkelmeßeinrichtung kann die Teilung des Teilungsträgers aber partielle Teilungsungenauigkeiten aufweisen. Bei einer Längenmeßeinrichtung mit großer Meßlänge, bei der der Teilungsträger aus mehreren aneinanderstoßenden Teilstücken besteht, können an den Stoßstellen zwischen den Teilstücken auch Teilstriche der Teilung fehlen. Bei Winkelmeßeinrichtungen können zudem Exzentrizitäten zwischen der Winkelteilung und der Drehachse der beiden zu messenden Objekte auftreten. Diese vorgenannten Störeinflüsse können aber negative Auswirkungen auf die geforderte Meßgenauigkeit haben.

Bei Positionsmeßeinrichtungen können aber derartige negative Störeinflüsse auf die Meßgenauigkeit dadurch weitgehend vermieden werden, daß die Teilung des Teilungsträgers von mehreren Abtasteinheiten, beispielsweise an zwei oder vier Abtaststellen, abgetastet und die von den Abtasteinheiten erzeugten periodischen Abtastsignale gleicher Phasenlage einander analog überlagert werden. Durch diese analoge Überlagerung der periodischen Abtastsignale können partielle Teilungsungenauigkeiten ausgemittelt werden. Überfährt eine Abtasteinheit eine Stoßstelle zwischen zwei Teilstücken eines gestoßenen Teilungsträgers, so liefert bei fehlenden Teilungsstrichen an dieser Stoßstelle die andere Abtasteinheit ein ausreichendes periodisches Abtastsignal zur Gewinnung genauer Meßwerte für die Relativlage der beiden Objekte. Mit zwei Abtasteinheiten können bei einer Winkelmeßeinrichtung Exzentrizitätsfehler und mit zwei weiteren Abtasteinheiten der sogenannte 2φ-Fehler der Teilscheibe eliminiert werden.

Aus der DE-L-29 52 106 ist eine Längenmeßeinrichtung bekannt, bei der die Teilung eines Teilungsträgers von zwei in Meßrichtung beabstandeten Abtasteinheiten abgetastet wird. Die von den beiden Abtasteinheiten gewonnenen periodischen Abtastsignale werden in analoger Form einander additiv überlagert, so daß sich eine höhere Meßgenauigkeit ergibt, da durch die beiden Abtasteinheiten ein insgesamt größerer Bereich der Teilung des Teilungsträgers als bei nur einer vorgesehenen Abtasteinheit abgetastet wird; eventuelle Teilungsungenauigkeiten haben durch diese Maßnahme praktisch keinen Einfluß auf die Meßgenauigkeit.

Die US-L-4 580 047 beschreibt eine Winkelmeßeinrichtung mit zwei Abtasteinheiten an zwei diametral gegenüberliegenden Abtaststellen zur Eliminierung von Exzentrizitätsfehlern und zur Überwachung der Phasenlage der periodischen Abtastsignale.

Die DE-A-18 11 961 offenbart ebenfalls eine Winkelmeßeinrichtung mit zwei Abtasteinheiten an zwei diametral gegenüberliegenden Abtaststellen, deren periodische Abtastsignale einander in analoger Form additiv überlagert werden, so daß neben der Unwirksammachung von eventuellen Teilungsungenauigkeiten der Teilscheibe auch Exzentrizitätsfehler der Lagerung der Teilscheibe eliminiert werden.

Die z.B. bei der Doppelabtastung der Winkelteilung einer Winkelmeßeinrichtung mittels der beiden Abtasteinheiten an den beiden Abtaststellen gewonnenen zwei periodischen Abtastsignale gleicher Phasenlage weisen im theoretischen Fall einer nicht vorhandenen Exzentrizität keine gegenseitigen Phasenverschiebungen auf. Die praktisch immer vorhandene Exzentrizität bewirkt jedoch eine gegenseitige Phasenverschiebung der beiden periodischen Abtastsignale, die bis zu einem gewissen Grad ohne nachteilige Auswirkung auf die Meßgenauigkeit zugelassen werden kann; die noch zulässige Exzentrizität sollte daher ein Zehntel der Gitterkonstanten (Periodenlänge) der Winkelteilung nicht überschreiten. Bei Überschreitung dieses Grenzwertes besteht die Gefahr, daß das analoge Summensignal der beiden periodischen Abtastsignale zu klein wird. Beträgt die Exzentrizität ein Viertel der Gitterkonstanten der Winkelteilung, so eilen das periodische Abtastsignal der ersten Abtasteinheit an der ersten Abtaststelle um 90° in der Phase vor und das periodische Abtastsignal der zweiten Abtasteinheit an der zweiten Abtaststelle um 90° in der Phase nach, so daß die beiden periodischen Abtastsignale einen gegenseitigen Phasenunterschied von 180° aufweisen, der zu einer Auslöschung ihres Summensignals führt, so daß kein Meßwert gebildet werden kann.

Die Gefahr der Überschreitung dieses Grenzwertes besteht insbesondere bei großen Beschleunigungen durch Stöße oder Vibrationen der Bearbeitungsmaschine bei einer Werkstückbearbeitung. In diesem Fall ist die Doppelabtastung, die im Normalbetrieb zur Erhöhung der Meßgenauigkeit dient, von Nachteil, da die beiden periodischen Abtastsignale bei ihrer Summenbildung sich gegenseitig ganz oder zumindest teilweise aufheben können, so daß fehlerhafte Meßergebnisse die Folge sind.

Um diesen Nachteil der Auslöschung zu vermeiden, wurde in der EP-A-0 302 194 eine Positionsmeßeinrichtung vorgeschlagen, bei der die Phasenlage der im Normalfall gleichphasigen Abtastsignale mehrerer Abtaststellen verglichen wird und in Abhängigkeit von diesem Vergleichsergebnis die Abtastsignale der Abtaststellen vor der analogen Addition ungleich gewichtet werden.

Diese Positionsmeßeinrichtung hat sich bei relativ langsamen Verfahrgeschwindigkeiten der zu messenden Objekte gut bewährt. Sie hat aber den Nachteil, daß besonders bei hohen Verfahrgeschwindigkeiten und beim Betrieb in rauher Umgebung mit sich ständig ändernden Exzentrizitätsfehlern auch der Wichtungsfaktor schnell geändert und nachgeführt werden muß. Diese Anpassung des Wichtungsfaktors ist aber nur mit einer Verzögerung möglich, wodurch wiederum Meßfehler entstehen.

Der Erfindung liegt die Aufgabe zugrunde, eine Positionsmeßeinrichtung mit mehreren Abtaststellen anzugeben, bei der äußere Störeinflüsse keinen Einfluß auf die Meßgenauigkeit haben.

Diese Aufgabe wird erfindungsgemäß durch die kennzeichnenden Merkmale des Anspruches 1 gelöst.

Die mit der Erfindung erzielten Vorteile bestehen insbesondere darin, daß durch die zusätzliche Auswertung wenigstens eines Abtastsignals einer Abtasteinheit in Störfällen, in denen das wenigstens eine überlagerte Signal nicht mehr auswertbar ist, dennoch alle abgetasteten Teilungsperioden der inkrementalen Teilung erfaßt werden.

Vorteilhafte Ausbildungen der Erfindung entnimmt man den abhängigen Ansprüchen.

Ausführungsbeispiele der Erfindung werden anhand der Zeichnung näher erläutert.

Es zeigt

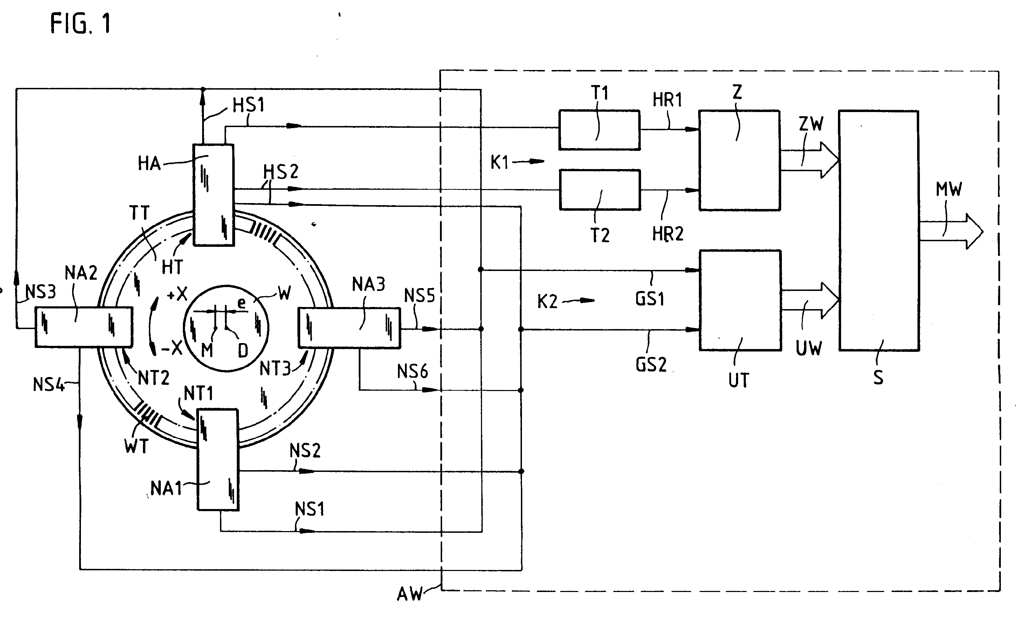

Figur 1 eine erste Winkelmeßeinrichtung.

In Figur 1 ist schematisch eine Winkelmeßeinrichtung dargestellt, bei der eine Teilscheibe TT mit einer inkrementalen Winkelteilung WT an einer Welle W befestigt ist, die mit einem nicht gezeigten drehbaren Objekt, beispielsweise mit einer Spindel eines Ma-schinentisches einer Bearbeitungsmaschine verbun-den ist. Mit einem ebenfalls nicht gezeigten stationären Objekt, beispielsweise mit einem Bett der Bearbeitungsmaschine, sind eine Hauptabtasteinheit HA und drei Nebenabtasteinheiten NA1, NA2, NA3 verbunden; die Hauptabtasteinheit HA und die erste Nebenabtasteinheit NA1 sowie die zweite Nebenabtasteinheit NA2 und die dritte Nebenabtasteinheit NA3 tasten an jeweils zwei diametral gegenüberliegenden Abtaststellen, der Hauptabtaststelle HT und den drei Nebenabtaststellen NT1, NT2, NT3, die Winkelteilung WT der Teilscheibe TT ab. Die Hauptabtasteinheit HA und die erste Nebenabtasteinheit NA1 sind gegen die zweite Nebenabtasteinheit NA2 und die dritte Nebenabtasteinheit NA3 jeweils um 90° versetzt.

Bei einer Drehung der Teilscheibe TT bezüglich der Hauptabtasteinheit HA und der drei Nebenabtasteinheiten NA1, NA2, NA3 erzeugen die Hauptabtasteinheit HA zwei periodische Hauptabtastsignale HS1, HS2 mit einem gegenseitigen Phasenversatz von 90° und die drei Nebenabtasteinheiten NA1, NA2, NA3 jeweils zwei periodische Nebenabtastsignale NS1, NS2, NS3, NS4, NS5, NS6 mit dem gleichen gegenseitigen Phasenversatz von 90°; dieser Phasenversatz von 90° dient in bekannter Weise zur Diskriminierung der Meßrichtung X (Drehrichtung der Teilscheibe TT). Das erste Hauptabtastsignal HS1 der Hauptabtasteinheit HA sowie die drei ersten Nebenabtastsignale NS1, NS3, NS5 der drei Nebenabtasteinheiten NA1, NA2, NA3 besitzen somit die Phasenlagen 0° und das zweite Hauptabtastsignal HS2 sowie die drei zweiten Nebenabtastsignale NS2, NS4, NS6 die Phasenlagen 90°, wenn keine Exzentrizität e vorhanden ist.

Der Mittelpunkt M der Teilscheibe TT und damit die Winkelteilung WT mögen nun gegenüber der Drehachse D der Welle W die Exzentrizität e aufweisen. Diese Exzentrizität e kann durch eine unvollkommene Zentrierung des Mittelpunktes M der Teilscheibe TT bzw. der Winkelteilung WT bezüglich der Drehachse D der Welle W, durch Lagerfehler der Welle W oder durch Beschleunigungen infolge von Erschütterungen oder Vibrationen der Bearbeitungsmaschine bewirkt sein, die die Teilscheibe TT momentan aus ihrer Mittenlage entfernen. Durch diese Exzentrizität e wird eine Phasenverschiebung $2\beta$ wirksam, die man so verstehen kann, daß die beiden periodischen Hauptabtastsignale HS1, HS2 der Hauptabtasteinheit HA beispielsweise um die Phasenverschiebung $+\beta$ vor-eilen und die beiden periodischen Nebenabtastsignale NS1, NS2 der diametral gegenüberliegenden ersten Nebenabtasteinheit NA1 um die Phasenverschie-bung $-\beta$ nacheilen, bezogen jeweils auf die geforderten Phasenlagen 0° und 90° bei nicht vorhandener Exzentrizität e; entsprechendes gilt jeweils auch für die Nebenabtastsignale NS3, NS4, NS5, NS6 der bei-den diametral gegenüberliegenden Nebenabtastein-heiten NA2, NA3.

Erfindungsgemäß werden in einer Auswertein-richtung AW zum einen die beiden analogen periodischen Hauptabtastsignale HS1, HS2 auf einem ersten Kanal K1 mittels zweier Triggerstufen T1, T2 in zwei Hauptrechtecksignale HR1, HR2 umgeformt und einem Vorwärts-/Rückwärtszähler Z zum Zählen der Teilungsperioden der Winkelteilung WT der Teilscheibe TT zugeführt. Zum anderen werden das erste analoge periodische Hauptabtastsignal HS1 der Hauptabtasteinheit HA und die drei ersten analogen periodischen Nebenabtastsignale NS1, NS3, NS5 der drei Nebenabtasteinheiten NA1 - NA3 - die gemeinsam der Phasenlage 0° zugeordnet sind - einander analog überlagert und als erstes gemitteltes Signal GS1 auf einem zweiten Kanal K2 einer Unterteilungseinheit UT zugeführt. Desgleichen werden das zweite analoge periodische Hauptabtastsignal HS2 der Hauptabtasteinheit HA und die drei zweiten analogen periodischen Nebenabtastsignale NS2, NS4, NS6 der drei Nebenabtasteinheiten NA1 - NA3 - die gemeinsam der Phasenlage 90° zugeordnet sind - einander analog überlagert und als zweites gemitteltes Signal GS2 auf dem zweiten Kanal K2 der Unterteilungseinheit UT zugeleitet.

Der codierte Zählwert ZW des Vorwärts-/Rückwärtszählers Z und der codierte Unterteilungswert UW der Unterteilungseinheit UT werden einer Codeanschlußlogik S zugeleitet, die Varianten des codierten Unterteilungswertes UW und des codierten Zählwertes ZW zur Erzeugung der Meßwerte MW für die Relativlage der beiden Objekte enthält; diese Codeanschlußlogik S kann aus einem Festwertspeicher bestehen. Eine derartige Einrichtung ist in der DE-L-29 38 318 beschrieben.

Die Erfindung ist sowohl bei Winkelmeßeinrichtungen als auch bei Längenmeßeinrichtungen mit Erfolg einsetzbar, die auf dem lichtelektrischen, magnetischen, induktiven oder kapazitiven Meßprinzip beruhen.

**Patentansprüche**

1. Positionsmeßeinrichtung zum Messen der Relativlage zweier Objekte, bei der die Teilung (WT) eines mit dem einen Objekt verbundenen Teilungsträgers (TT) von mehreren mit dem anderen Objekt verbundenen Abtasteinheiten (HA, NA1, NA2, NA3) zur Erzeugung jeweils wenigstens eines Abtastsignales (HS1, HS2, NS1, NS2, NS3, NS4, NS5, NS6) abgetastet wird und bei der die gleichphasigen Abtastsignale (HS1, NS1, NS3, NS5; HS2, NS2, NS4, NS6) mehrerer Abtasteinheiten (HA, NA1, NA2, NA3) zur Erzeugung von gemittelten Signalen (GS1, GS2) für die Bildung des Meßwertes (MW) der Relativlage der beiden Objekte einander überlagert werden, dadurch gekennzeichnet, daß das wenigstens eine Abtastsignal (HS1, HS2) einer Abtasteinheit (HA) mittels einer Triggerstufe (T1, T2) umgeformt und einem Zähler (Z) zur Bildung eines codierten Zählwertes (ZW) zugeführt wird, daß weiterhin das wenigstens eine durch Überlagerung gewonnene und gemittelte Signal (GS1, GS2) einer Unterteilungseinheit (UT) zur Bildung von codierten Unterteilungswerten (UW) zugeführt wird und daß der codierte Zählwert (ZW) und der codierte Unterteilungswert (UW) zur Erzeugung des Meßwertes (MW) mittels einer Codeanschlußlogik (5) aneinander angeschlossen werden.

2. Positionsmeßeinrichtung nach Anspruch 1, dadurch gekennzeichnet, daß zur Abtastung der inkrementalen Winkelteilung (T) einer Teilscheibe (TT) vier um jeweils 90° räumlich zueinander versetzte und diametral gegenüberliegende Abtasteinheiten (HA, NA1, NA2, NA3) vorgesehen sind.

3. Positionsmeßeinrichtung nach Anspruch 2, dadurch gekennzeichnet, daß zwei um 90° gegeneinander phasenverschobene analoge periodische Abtastsignale als Hauptabtastsignale (HS1, HS2) auf einem ersten Kanal (K1) mittels zweier Triggerstufen (T1, T2) in zwei Hauptrechtecksignale (HR1, HR2) umgeformt und einem Vorwärts-/Rückwärtszähler (Z) zum Zählen der Teilungsperioden der Winkelteilung (WT) zugeführt werden, daß die Abtastsignale (HS1, NS1, NS3, NS5) der vier Abtasteinheiten (HA, NA1, NA2, NA3) mit der Phasenlage 0° einander analog überlagert werden und als erstes gemitteltes Signal (GS1) auf einem zweiten Kanal (K2) der Unterteilungseinheit (UT) zugeführt werden und die Abtastsignale (HS2, NS2, NS4, NS6) der vier Abtasteinheiten (HA, NA1, NA2, NA3) mit der Phasenlage 90° einander analog überlagert werden und als zweites gemitteltes Signal (GS2) auf dem zweiten Kanal (K2) der Unterteilungseinheit (UT) zugeführt werden.

**Claims**

1. Position measuring device for measuring the relative position of two objects, in which the graduation (WT) of a graduation carrier (TT) connected to one object is scanned by several scanning units (HA, NA1, NA2, NA3) connected to the other object for generating in each case at least one scan signal (HS1, HS2, NS1, NS2, NS3, NS4, NS5, NS6) and in which the in-phase scan signals (HS1, NS1, NS3, NS5; HS2, NS2, NS4, NS6) of several scanning units (HA, NA1, NA2, NA3) for generating average signals (GS1, GS2) are superimposed on each other for forming,the measured value (MW) of the relative position of the two objects, characterised in that the at least one scan signal (HS1, HS2) of one scanning unit (HA) is converted by means of a trigger stage (T1, T2) and fed to a counter (Z) for forming a coded count (ZW), that furthermore the at least one signal (GS1, GS2) obtained by superposition and averaged is fed to a subdivision unit (UT) for forming coded subdivision values (UW) and that the coded count (ZW) and the coded subdivision value (UW) are connected to each other by means of a code connecting logic circuit (5) to produce the measured value (MW).

**2.** Position measuring device according to claim 1, characterised in that four scanning units (HA, NA1, NA2, NA3) spatially offset from each other by 90° each and diametrically opposed, are provided for scanning the incremental angular graduation (T) of an index plate (TT).

**3.** Position measuring device according to claim 2, characterised in that two analogue periodic scan signals in quadrature as the main scan signals (HS1, HS2) are converted on a first channel (K1) by means of two trigger stages (T1, T2) to two main square wave signals (HR1, HR2) and fed to a bidirectional counter (Z) for counting the graduation periods of the angular graduation (WT), that the scan signals (HS1, NS1, NS3, NS5) of the four scanning units (HA, NA1, NA2, NA3) with a phase position of 0° are superimposed on each other in analogue form and fed as a first average signal (GS1) on a second channel (K2) to the subdivision unit (UT), and the scan signals (HS2, NS2, NS4, NS6) of the four scanning units (HA, NA1, NA2, NA3) with a phase position of 90° are superimposed on each other in analogue form and fed as a second average signal (GS2) on the second channel (K2) to the subdivision unit (UT).

**Revendications**

**1.** Dispositif de mesure de position pour la mesure de la position relative de deux objets, dans lequel la graduation (WT) d'un support de graduation (TT) lié à l'un des objets est lue par plusieurs unités de lecture (HA, NA1, NA2, NA3) liées à l'autre objet afin de produire chaque fois au moins un signal de lecture (HS1, HS2, NS1, NS2, NS3, NS4, NS5, NS6) et dans lequel les signaux de lecture (HS1, NS1, NS3, NS5; HS2, NS2, NS4, NS6) de même phase de plusieurs unités de lecture (HA, NA1, NA2, NA3) sont superposés les uns aux autres pour produire des signaux (GS1, GS2) moyens pour former la valeur de mesure (MW) de la position relative des deux objets, caractérisé par le fait que le signal de lecture (HS1, HS2), au nombre d'au moins un, d'une unité de lecture (HA) est transformé au moyen d'un étage de déclenchement (T1, T2) et est amené à un compteur (Z) pour former une grandeur de comptage (ZW) codée, que le signal (GS1, GS2), au nombre d'au moins un, moyenné obtenu par superposition est amené à une unité de subdivision (UT) pour former des valeurs de subdivision (UW) codées et que la grandeur de comptage (ZW) codée et la valeur de subdivision (UW) codée sont combinées au moyen d'une logique de liaison de code (S) pour produire la valeur de mesure (MW).

**2.** Dispositif de mesure de position selon la revendication 1, caractérisé par le fait qu'il est prévu, pour la lecture de la graduation angulaire (T) incrémentale d'un disque gradué (TT), quatre unités de lecture (HA, NA1, NA2, NA3) mutuellement décalées dans l'espace de 90° et diamétralement opposées.

**3.** Dispositif de mesure de position selon la revendication 2, caractérisé par le fait que deux signaux de lecture périodiques analogiques mutuellement déphasés de 90° sont transformés en tant que signaux de base (HS1, HS2) en deux signaux carrés de base (HR1, HR2) au moyen de deux étages de déclenchement (T1, T2) sur un premier canal (K1) et amenés à un compteur/décompteur (Z) pour le comptage des périodes de graduation de la graduation angulaire (WT), que les signaux de lecture (HS1, NS1, NS3, NS5) des quatre unités de lecture (HA, NA1, NA2, NA3) de phase 0° sont superposés analogiquement les uns aux autres et sont amenés en tant que premier signal moyen (GS1) sur un deuxième canal (K2) de l'unité de subdivision (UT) et les signaux de lecture (HS2, NS2, NS4, NS6) des quatre unités de lecture (HA, NA1, NA2, NA3) de phase 90° sont superposés analogiquement les uns aux autres et amenés en tant que deuxième signal moyen (GS2) sur le deuxième canal (K2) de l'unité de subdivision (UT).

# FIG. 1

EP 0 395 936 B1